# EUROPEAN PATENT APPLICATION

(11) **EP 2 894 416 A1**
(43) Date of publication of application: **15.07.2015**
(21) Application number: 13819448.5
(22) Date of filing: 12.07.2013
(51) Int. Cl.: F24H 1/20, F24D 3/10, F24H 9/20, F24D 19/00

(54) **HOT-WATER BOILER, HEATING PIPES AND INSTALLATION STRUCTURE THEREFOR**

(30) Priority: 20.07.2012 KR 20120079424; 18.04.2013 KR 20130042893; 14.05.2013 KR 20130054200
(71) Applicant: Shin, Yoon Min, Dongjak-gu, Seoul 156-846 (KR)
(72) Inventor: Shin, Yoon Min, Dongjak-gu, Seoul 156-846 (KR)
(74) Representative: Van Breda, Jacobus
(86) International application number: PCT/KR2013/006234
(87) International publication number: WO 2014/014236

(57) **Abstract**

The present invention relates to a hot-water boiler, which is particularly aimed to improve thermal conduction efficiency and thus to save energy by increasing the heating speed of hot water and facilitating the flow of hot water at the same time. The present invention is characterized by inducing and discharging air to the upper side of a raw water tank, and heating raw water and returning water while the raw water and the returning water fill at least 95% of the inside of a penetration section and an adaptor section, thereby significantly improving the internal expansion force. The heating pipes of the present invention are extrusion molded to have a hot-water pathway section in the inside thereof, wherein the hot-water pathway section can be of a semi-elliptical, rectangular, triangular, or circular shape, and is formed integrally with a sensible heat section having a flat plate shape, on both ends of the top surface thereof, and wherein an insulation section, which has an air layer at the outer circumference of the lower part of the hot-water pathway section, is formed such that the top ends are integral with the sensible heat section.

## Description

### [Technical Field]

The present invention relates to a hot-water boiler, a heating pipe, and an installation structure thereof and, more particularly, aims at increasing the heating rate of hot water, minimizing noise, promoting energy-saving by facilitating the flow of hot water to increase thermal conduction efficiency, and allow the heat in the heating pipe, which uses the hot-water boiler, to be thermally conducted to a heating floor or heating mat without any loss.

### [Background Art]

In general, a heating apparatus used in a heating floor or heating mat comprises a heating water tank for storing heating water, a heater for heating the heating water to produce hot water, a circulation pump for circulating the hot water, and a heating pipe arranged in the heating mat.

This conventional heating apparatus has a structure in which when the heater receives and heats the heating water stored in the heating water tank to produce hot water, the circulation pump operates to circulate the hot water in the heating pipe.

However, since the conventional heating apparatus is configured such that the circulation pump is used to circulate the heating water, the operation of the circulation pump generates noise and electromagnetic waves, and the lifespan of the heating apparatus may be shortened by a breakdown of the circulation pump, which is problematic.

To solve these problems, Korean Patent No. 10-0312643 discloses a "liquid-circulation type heating apparatus" which comprises a heat radiation member, a circulation pipe embedded in the heat radiation member, a heating means connected to the circulation pipe and heating a liquid stored in the circulation pipe, a pressure-buffering means for buffering the pressure of the liquid expanded by the operation of the heating means to thereby enable the liquid to circulate, a first backflow prevention means provided between the heating means and the pressure-buffering means, and a second backflow prevention means provided to face the first backflow prevention means, and this heating apparatus is configured to heat the liquid flowing through the circulation pipe in the heat radiation member by heat transfer and absorb the pressure generated when the liquid is naturally circulated by the expansion force thereof.

However, the above conventional liquid-circulation type heating apparatus circulates the liquid by the expansion force generated when the liquid is heated, which generates a very high pressure in the circulation pipe, and thus a separate pressure-buffering means is required to buffer the high pressure, which is also problematic.

To solve these problems, Korean Patent No. 10-0803282 discloses a heating apparatus using hot water and steam in which a mixture of hot water and steam is automatically circulated in a heating pipe by the expansion force of steam generated when a heater receives and heats raw water, which does not generate noise and electromagnetic waves due to the circulation of hot water and steam.

This prior art uses a circulation system in which raw water introduced from a raw water tank and passing through a penetration is heated using a positive temperature coefficient (PTC) heater connected to the outside of the penetration and, at the same time, return water that is hot water circulating in the heating pipe is returned to the raw water tank, thus causing some problems. First of all, since the raw water in the penetration is heated by heat transfer from the outside of the penetration, the heating time of the raw water is increased, which reduces the heating rate of the raw water circulated in the heating pipe. Moreover, the PTC heater is generally operated by an alternating current, and thus harmful electromagnetic waves due to the supply of alternating current are introduced into the circulated water and applied to the human body through the heating pipe, exerting a bad influence on the human body. Moreover, the PTC heater (which is generally operated with an alternating current of 220 V at 60 Hz frequency with a power consumption of 300 W or higher) has a structure in which a voltage is applied to a metal thin film electrode to heat a ceramic plate, and thus the pre-start heating time is increased, which makes it difficult to achieve rapid heating, thus significantly reducing the heat transfer efficiency.

In this case, the excessive power consumption results in a waste of electricity, and the assembling process is complicated due to its structural complexity, thus increasing the manufacturing cost of the apparatus.

As another prior art, Korean Patent No. 10-1038576 has the same structural disadvantages as the prior art.

Moreover, according to the prior art, the circulation pump is not used to prevent noise, but the raw water is heated and circulated through the heating pipe, and the return water circulated is introduced into the raw water tank together with air. Therefore, the air introduced into the raw water tank together with the return water causes a bubbling phenomenon, which generates crackling or bubbling noise. As a result, the noise, which may be smaller than that during the use of the circulation pump, also becomes a very loud noise during a night's sleep, resulting in significant stress, which is very problematic.

Furthermore, the heating pipe or hose, through which the heating water of the hot-water boiler is supplied to heat a building, is formed by extrusion molding of aluminum, stainless steel, copper, rubber, synthetic resin, etc.

This heating pipe or hose generally has a circular pipe shape, and thus the hot water passing through the inside of the pipe generates sensible heat on the outer circumferential surface of the pipe to apply the heat to the heating floor or heating mat.

However, although it is preferred that the heat of the hot water flowing through the inside of the heating pipe or hose is transferred to the outer circumferential surface of the pipe and then applied to the upper surface of the mat or on the heating floor, only some of the heat transferred to the outer circumferential surface of the pipe is applied to the upper surface of the mat or on the heating floor, which does not sufficiently increase the heat transfer effect. As a result, the hot-water boiler is required to operate continuously or the setting temperature is required to be increased, thus increasing costs related to energy consumption such a waste of electricity, which is also problematic.

To solve these problems, Korean Utility Model No. 20-0259733 discloses a hollow hose which is formed with a wavy outer surface and a flat circular surface such that when laid in the indoor floor, the wavy outer surface of the hollow hose improves the contact with cement, and the increased heat transfer area of the wavy surface increases the heat transfer effect due to fluid turbulence of the heating water supplied. However, in this case, although it is preferred that the heat of the hot water flowing through the inside of the hose is transferred to the wavy surface and then applied to the floor, the heat of the hot water is applied to the entire outer circumferential surface of the hollow hose, and thus the heat required to be transferred to the floor leaks to the bottom of the floor and to the outside bottom, resulting in significant loss of heat energy, which is very problematic.

As another solution, Korean Patent Publication No. 10-2012-0113371 discloses a hose for heating system with excellent heat transfer effect in which a protrusion is formed on the outer surface of the hose to increase the surface area. However, in this case, the heat of hot water in the hose is also transferred through the outer circumferential surface and the protrusion of the hose, but the heat is transferred to the entire outer circumferential surface of the hose, and thus the heat required to be transferred to the floor also leaks to the bottom of the floor and to the outside bottom, resulting in significant loss of heat energy.]

### [Disclosure]

### [Technical Problem]

An object of the present invention is to prevent noise from being generated by air discharge by preventing return water from being introduced into a raw water tank when hot water is circulated and used for the purpose of heating, and increase the heat transfer efficiency and reduce the thermal expansion time by heating raw water and return water in a penetration at the same time, thus reducing the power consumption and preventing the generation of electromagnetic waves.

That is, the raw water and the return water are allowed to be continuously circulated through a single heating pipe, in which the return water is not introduced into the raw water tank to prevent noise from being generated in the raw water tank due to the introduction of the return water and air, and the raw water and the return water are rapidly heated using a heater (which uses surface heating) operated by the supply of direct current in the penetration to prevent loss of heat of hot water and, at the same time, prevent the generation of electromagnetic waves, thus reducing the adverse effects of electromagnetic waves on the human body.

Another object of the present invention is to increase the thermal expansion force in a penetration by sufficiently discharging air remaining in the penetration and an adaptor, thus increasing the heat transfer efficiency and, at the same time, significantly reducing the energy consumption.

Still another object of the present invention is to increase the heat transfer to the floor and reduce the loss of heat energy as much as possible by allowing the heat in the heating pipe to be transferred to the upper surface of the heating pipe, thus promoting energy-saving.

### [Technical Solution]

A first embodiment of the present invention is configured in a manner that one side of a raw water supply inlet pipe through which raw water is supplied from a raw water tank and one side of a return water pipe through which return water is circulated from a heating pipe are respectively inserted and connected to a connection member integrally formed with an adaptor, in which a check valve is installed on one side of the adaptor, a penetration is screw-connected between a screw portion on the other side of the adaptor and a connector connected to the other side of the heating pipe, and a heater is inserted into the penetration to heat the raw water and the return water in the penetration.

A second embodiment of the present is configured in a manner that raw water and return water are heated in a state where more than 95% of a penetration and an adaptor are filled with the raw water and the return water by discharging air to the top of a raw water tank, thus significantly improving the internal expansion force.

Moreover, the adaptor and the penetration are installed to be tilted such that the air in the penetration can be discharged more rapidly.

Furthermore, in the present invention, an air hose connected to an air outlet, which protrudes upwardly from the top of the adaptor, is connected to an air outlet at the top of one side of the raw water tank such that the air can be discharged when the raw water is initially injected after opening a cover of the raw water tank.

In addition, in the present invention, the air outlet and the air inlet are formed in a Y shape to prevent the discharge of steam during the air discharge and, at the same time, to separate the water and air such that the backflow of water is prevented, thus minimizing noise and facilitating the air discharge.

Additionally, in the present invention, another return water inlet is installed at the entrance of the penetration in addition to the return water inlet, and another hot-water discharge pipe is installed on the other side of the connector in addition to the hot-water discharge pipe, which are connected through a heating pipe so as to heat a hot-water mat or heating floor having a greater area.

Also, in the present invention, the penetration is made of synthetic resin, a heat conductive metal plate is formed by insert injection in an insertion portion of the penetration, and the heater is inserted into the heat conductive metal plate, which reduces the weight of the penetration, thus reducing the total weight of a hot-water boiler, preventing loss of heat, and promoting cost reduction.

A third embodiment of the present invention provides a heating pipe comprising a hot-water passing space formed by extrusion molding, in which a sensible heat portion in the form of a flat plate is integrally formed on the upper surface of a semi-oval, rectangular, triangular, or circular hot-water passing space and an upper end of a thermal insulator having an air layer is integrally formed with the sensible heat portion on the lower outer circumference of the hot-water passing space.

### [Advantageous Effects]

According to the present invention, raw water and return water are introduced and returned through a single adaptor to be rapidly heated in a single penetration, which prevents loss of heat caused when hot water is introduced into a raw water thank, thus reducing power consumption. Moreover, the bubbling phenomenon, which occurs when the air contained in the hot water is introduced into the raw water tank and mixed with water, is avoided to thereby prevent the generation of noise, thus preventing stress due to the noise. Furthermore, the heater made of copper thin plates and carbon resin can be rapidly heated by the supply of current and apply heat to the raw water and the return water, which reduces the heating time, and the larger heating area due to rectangular surface contact further significantly reduces the heating time. In addition, a heat radiation fin structure and a hollow insulator significantly reduce the heating time in the penetration, and the inside of the penetration is heated simultaneously with the supply of current to the heater, which provides rapid heating of a heating pipe, thus providing convenience of use. In particular, the heater operated with direct current does not generate electromagnetic waves, which makes it possible to provide a hot-water boiler that can reduce electric charges and is harmless to the human body.

Moreover, according to the present invention, an adaptor with a check valve is assembled with the penetration, which simplifies the assembling process, thus significantly reducing the manufacturing cost.

Furthermore, according to the present invention, the air remaining in the penetration, through which the raw water and the return water pass, is smoothly discharged, which increases the thermal expansion force in the penetration, thus increasing the heat transfer efficiency, significantly reducing the energy consumption, minimizing noise, preventing loss of heat, and promoting cost reduction.

In addition, according to the present invention, the surface area of a sensible heat portion is increased by forming the sensible heat portion in the form of a flat plate on the upper surface of a semi-oval, rectangular, triangular, or circular hot-water passing space such that the heat generated by the sensible heat portion can be more efficiently conducted to the floor. In particular, the heat is prevented from leaking to the bottom of the hot-water passing space and the circumference of both sides, thus reducing loss of heat and promoting energy-saving.

### [Description of Drawings]

FIG. 1 is a perspective view showing the entire configuration in accordance with a first embodiment of the present invention.
FIG. 2 is a schematic view showing the flow of raw water and return water in accordance with the first embodiment of the present invention.
FIG. 3 is a partial cross-sectional view of an adaptor in accordance with the first embodiment of the present invention.
FIG. 4 is a longitudinal cross-sectional view of a penetration structure in accordance with the first embodiment of the present invention.

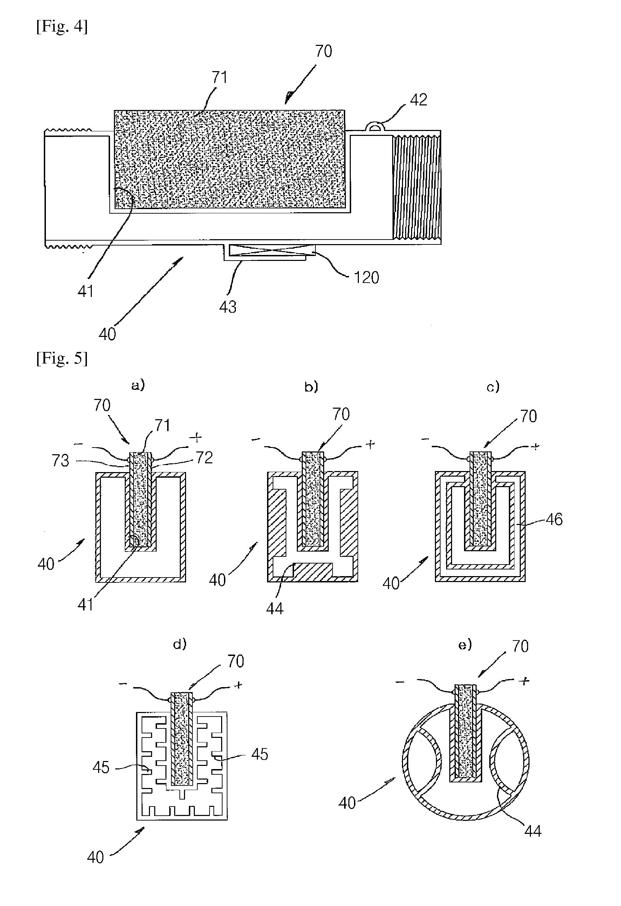

FIG. 5 shows partial side views of essential parts in accordance with the first embodiment of the present invention, in which FIG. 5a is a side cross-sectional view of the present invention, FIG. 5b is a cross-sectional view of a surface contact protrusion formed in a penetration to increase the surface contact ratio of raw water and return water, FIG. 5c is a cross-sectional view of a hollow portion formed between the outside of a heater insertion groove and the inside of the penetration, FIG. 5d is a cross-sectional view of a heat radiation fin formed on the outside of the heater insertion groove and the inside of the penetration, respectively, and FIG. 5e is a cross-sectional view in an aspect different from FIG. 5b.
FIG. 6 is an exploded perspective view showing a heater to be inserted into a penetration in accordance with the first embodiment of the present invention.
FIG. 7 is a perspective view showing the entire configuration in accordance with a second embodiment of the present invention.
FIG. 8 is a partial exploded perspective view of essential parts in accordance with the second embodiment of the present invention.
FIG. 9 is a partial cross-sectional view of essential parts in accordance with the second embodiment of the present invention.
FIG. 10a is a partial cross-sectional view of essential parts in accordance with another embodiment of FIG. 9.
FIG. 10b is a partial side cross-sectional view of FIG. 10a.
FIGS. 11a and 11b are partial cross-sectional views in accordance with the second embodiment of the present invention, in which FIG. 11a shows a closed cover and FIG. 11b shows an opened cover.
FIG. 12 is a cross-sectional view in accordance with another embodiment of the second embodiment of the present invention.
FIG. 13 is a partial cross-sectional view of essential parts in accordance with another embodiment of the second embodiment of the present invention.
FIG. 14 is a partial cross-sectional view of essential parts in accordance with another embodiment of the second embodiment of the present invention.
FIG. 15a is a partial exploded cross-sectional view in accordance with another embodiment of the second embodiment of the present invention.
FIG. 15b is a partial side view showing the inside of FIG. 15a.
FIG. 15c is an enlarged view showing the operation of FIG 15a.
FIG. 16 is an operational flowchart in accordance with the second embodiment of the present invention.
FIG. 17 is a view showing another configuration in accordance with the second embodiment of the present invention.
FIG. 18 is a cross-sectional view in accordance with a third embodiment of the present invention.
FIG. 19 is a perspective view of FIG. 18.
FIG. 20 is a cross-sectional view in accordance with the third embodiment of the present invention.
FIG. 21 is a perspective view of FIG. 20.
FIG. 22 is a cross-sectional view in accordance with another embodiment of the third embodiment of the present invention.
FIG. 23 is a perspective view of FIG. 22.
FIG. 24 is a cross-sectional view in accordance with still another embodiment of the third embodiment of the present invention.
FIG. 25 is a perspective view of FIG. 24.
FIG. 26 is a cross-sectional view in accordance with yet another embodiment of the third embodiment of the present invention.
FIG. 27 is a perspective view of FIG. 26.
FIG. 28 is a cross-sectional view in accordance with still yet another embodiment of the third embodiment of the present invention.
FIG. 29 is a perspective view of FIG. 28.
FIG. 30 is a cross-sectional view in accordance with a further embodiment of the third embodiment of the present invention.
FIG. 31 is a perspective view of FIG. 30.
FIG. 32 is a cross-sectional view in accordance with another further embodiment of the third embodiment of the present invention.
FIG. 33 is a perspective view of FIG. 32.
FIGS. 34a, 34b, 34c, 34e, and 34f are cross-sectional views of heating pipes without a wing-shaped sensible heat portion in accordance with another embodiment of the third embodiment of the present invention.
FIG. 35 is a cross-sectional view showing the installation in accordance with the third embodiment of the present invention.
FIG. 36 is a cross-sectional view showing the third embodiment of the present invention.
FIG. 37 is an exploded perspective view showing the sealing of an air layer and the connection of a hose in accordance with the third embodiment of the present invention.
FIG. 38 is a cross-sectional view of FIG. 37.
FIG. 39 is a plan view showing an example of the installation of a heating pipe in accordance with the third embodiment of the present invention.

### [Best Mode for Carrying Out the Invention]

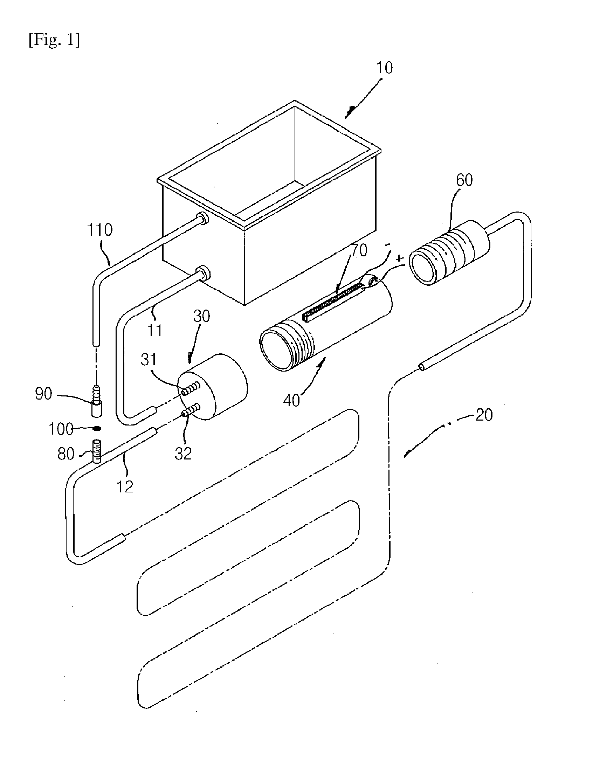

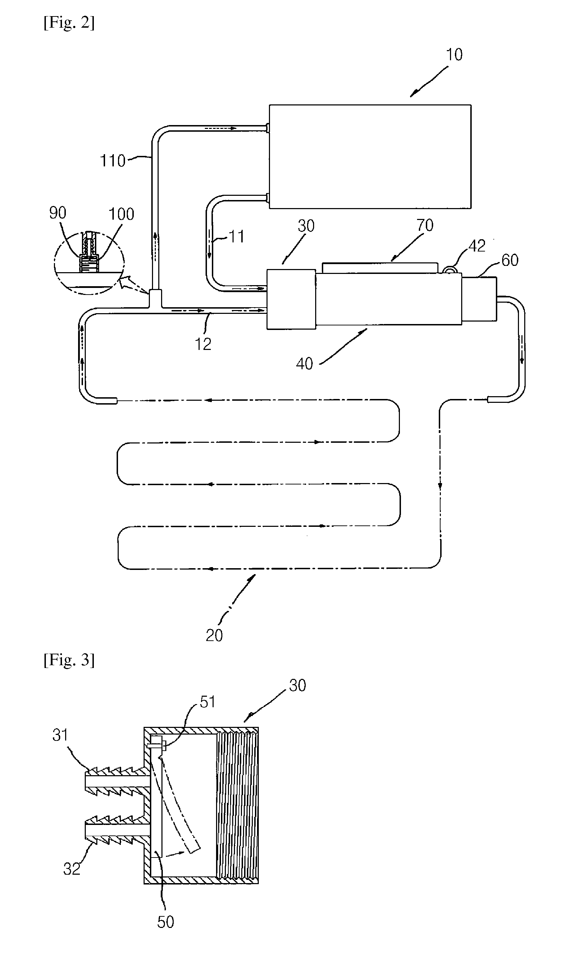

The present invention according to a first embodiment will be described with reference to FIGS 1 to 6.

That is, the present invention provides a hot-water boiler comprising an adaptor 30 which connects one side of a raw water supply inlet pipe 11 through which raw water is supplied from a raw water tank 10 and one side of a return water pipe 12 through which return water is circulated from a heating pipe 20, respectively, such that the return water is prevented from being introduced into the raw water tank 10 to eliminate noise, a check valve 50 which allows the raw water and the return water to be introduced into a penetration 40 in the single adaptor 30, and a heater 70 which heats the raw water and the return water at the same time in the penetration 40 installed between the adaptor 30 and a connector 60 connected to the other side of the heating pipe 20.

In the above, an air discharge induction filter 100 (e.g., cotton fabric, leather, etc. with small holes) is fixedly mounted on one side of a connection pipe 90 which is put on a screw pipe 80 installed between one side of the heating pipe 20 and the return water pipe 12, and an air discharge pipe 110 is connected to the other side of the connection pipe 90 and opens into the raw water tank 10.

The adaptor 30 is formed into one body, in which a raw water inlet 31 in the form of a screw, on which one side of the raw water supply inlet pipe 11 is put, is integrally formed at the top of one side thereof and a return water inlet 32 in the form of a screw, on which one side of the return water pipe 12 is put, is integrally formed at the bottom of one side thereof, respectively. Moreover, a single check valve 50 is installed by a fixing pin at the top of the inside of the adaptor 30 to be opened and closed by the raw water and the return water introduced through the raw water and return water inlets 31 and 32.

Moreover, the penetration 40 is screw-connected between a screw portion on the other side of the adaptor 30 and the connector 60 connected to the other side of the heating pipe 20, and an insertion groove 41 into which the heater 70 is inserted is formed in the penetration 40 such that the heater 70 is inserted therein.

The penetration 40 is formed by extrusion molding of aluminum, in which an earth portion 42 for connecting an earth terminal is formed to protrude in a ring shape from the top of one side of the penetration 40, and an insertion bracket 43 into which a temperature sensor 120 is inserted is formed to protrude from the bottom thereof.

The heater 70 is configured by bonding copper thin plates 72 and 73 to both ends of a surface heating element 71 made of carbon fiber paper, carbon nanotubes (CNTs), vapor-grown carbon fiber (VGCF), carbon nanohorns, or fullerene in the center of the heater 70, and direct current terminals (+) and (-) are formed on the copper thin plates 72 and 73 to supply a direct current. The surface heating element 71 may be made of active carbon fiber or made by injection-molding a mixture of flexible resin and carbon fiber, and its resistance value can be adjusted depending on the carbon content.

It is preferred that a direct current of 5 A at a voltage of 12 V is applied to the copper thin plates 72 and 73 to generate a power of 36 W or a direct current of 3 A at a voltage of 24 V is applied to the copper thin plates 72 and 73 to generate a power of 36 W, thus preventing the temperature from rising above 150 degrees Celsius.

Meanwhile, as shown in FIG. 5b or 5e, a surface contact protrusion 44 is formed in the penetration 40 to increase the surface contact ratio of the raw water and the return water, or as shown in FIG. 5d, a heat radiation fin 45 is formed on the outside of the heater insertion groove 41 and the inside of the penetration 40, respectively, to significantly reduce the heating time of the raw water and the return water passing through the penetration 40, or as shown in FIG. 5c, a hollow portion 46 is formed between the outside of the heater insertion groove 41 and the inside of the penetration 40 to provide thermal insulation of the heated raw water and return water, thus increasing thermal efficiency.

According to the present invention having the above-described configuration, when a direct current (+) (-) is supplied to the copper thin plates (electrodes) 72 and 73 of the heater 70, heat is generated through the surface area of a carbon resistor in the surface heating element 71 made of carbon fiber, etc. and conducted to the copper thin plates 72 and 73, thus causing heating. Therefore, the heating of the heater 70 is efficiently made by the surface contact when the heater 70 is inserted into the insertion groove 41 of the penetration 40, that is, when the copper thin plates 72 and 73 are brought into surface contact with the inner surface of the insertion groove 41 of the penetration 40, thus providing efficient heating by the surface contact.

As such, the heater 70 generates heat when being brought into surface contact with the inner surface of the insertion groove 41, and thus the raw water and the return water can be rapidly heated at the same time, which will be described in more detail later. Moreover, the heating by the supply of direct current provides power-saving and prevents the generation of electromagnetic waves.

In this state, the temperature sensor 120 detects the temperature, and when the temperature reaches a target temperature, the heating is stopped by the operation of a control circuit, not shown, and when the temperature is below a target value, the heating is restarted.

As such, during the heating, the raw water from the raw water supply pipe 11 and the return water from the return water pipe 12 are introduced through the raw water and return water inlets 31 and 32 of the adaptor 30. At this time, the inside of the penetration 40 is thermally expanded by rapid heating of the heater 70, and thus the raw water and the return water, which are to move to the heating portion, open the check valve 50 by the expansion force and are introduced into the penetration 40 at a higher movement rate.

Therefore, since the raw water and the return water are heated at the same in the penetration 40, the return water is not returned to the raw water tank 10 as in the prior art, and thus the return water is reheated together with the raw water present in the penetration 40 while preventing heat loss of hot water. As a result, the heating time of the heater 70 is significantly reduced, thus preventing power consumption. Moreover, the hot water (return water) circulating in the heating pipe 20 is to be forcibly introduced into the adaptor 30 by the thermal expansion force in the penetration 40, and thus the hot water is forcibly moved to the return water inlet 32 of the adaptor 30, but the air, which is contained in the hot water and is lighter than the hot water, moves to the air discharge pipe 110, a bypass pipe, and is then introduced into the raw water tank 10. At this time, only the air passes through the air discharge induction filter 100 installed in the inside of the connection pipe 90, and the hot water moves the return water inlet 32 of the adaptor 30. As a result, the bubbling phenomenon, which occurs when the air contained in the hot water is introduced into the raw water tank 10, is avoided, thus preventing the generation of noise.

Moreover, as shown in FIG. 5, according to the first embodiment of the present invention, the surface contact protrusion 44 is formed in the penetration 40 to increase the surface contact ratio of the raw water and the return water, or the heat radiation fin 45 is formed on the outside of the heater insertion groove 41 and the inside of the penetration 40, respectively, to significantly reduce the heating time by the surface contact heating of the raw water and the return water passing through the penetration 40 and by the surface contact heating of the copper thin plates 72 and 73, or as shown in FIG. 5c, the hollow portion 46 is formed between the outside of the heater insertion groove 41 and the inside of the penetration 40 to provide thermal insulation of the heated raw water and return water, thus increasing thermal efficiency.

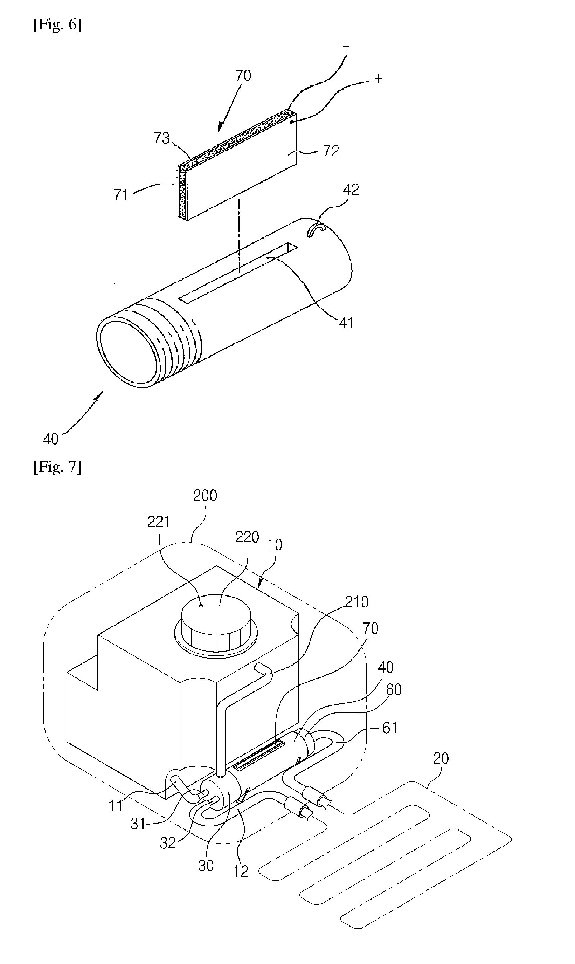

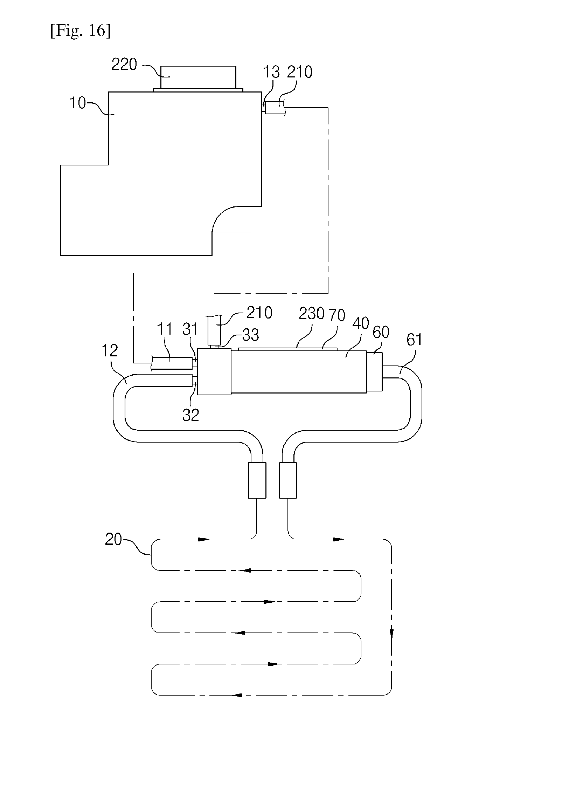

Next, the present invention according to a second embodiment will be described with reference to FIGS 7 to 17.

According to the second embodiment of the present invention, one side of a raw water supply pipe 11, through which raw water is supplied from a raw water tank 10 installed in a case 200, is connected to a raw water inlet 31 of an adaptor 30, a hot-water discharge pipe 61 is installed on a connector 60 connected to one side of a penetration 40 connected to the adaptor 30, a heating pipe 20 is connected between the hot-water discharge pipe 61 and a return water pipe 12 connected to a return water inlet 32 installed in the adaptor 30, and the heater 70 is inserted into an insertion portion 41 of the penetration 40. In this state, an air hose 210 is connected between an air outlet 33 installed at the top of the adaptor 30 and an air inlet 13 installed at the top of one side of the raw water tank 10. Here, the air inlet 13 is integrally formed to penetrate the inside of a raw water injection hole 14 of the raw water tank 10, and an air outlet 13' connected to the air inlet 13 is bought into surface contact with the inner surface of a cover 220 when it closes the cover 220. In this state, while the air outlet 13' is brought into surface contact with the inner lower surface of the cover 220, the air generated by the expansion force of the inside of a thermal expansion portion 200, which will be described later, is discharged through a small air hole 221 formed in the cover 220 through a small gap between the air outlet 13' and the inner lower surface of the cover 220.

In the above description, a wing of a check valve 50 is installed by a pin 51 on the inside of the adaptor 30 such that the check valve 50 is opened only when the raw water and the return water are introduced, and the small air hole 221 is formed in the cover 220.

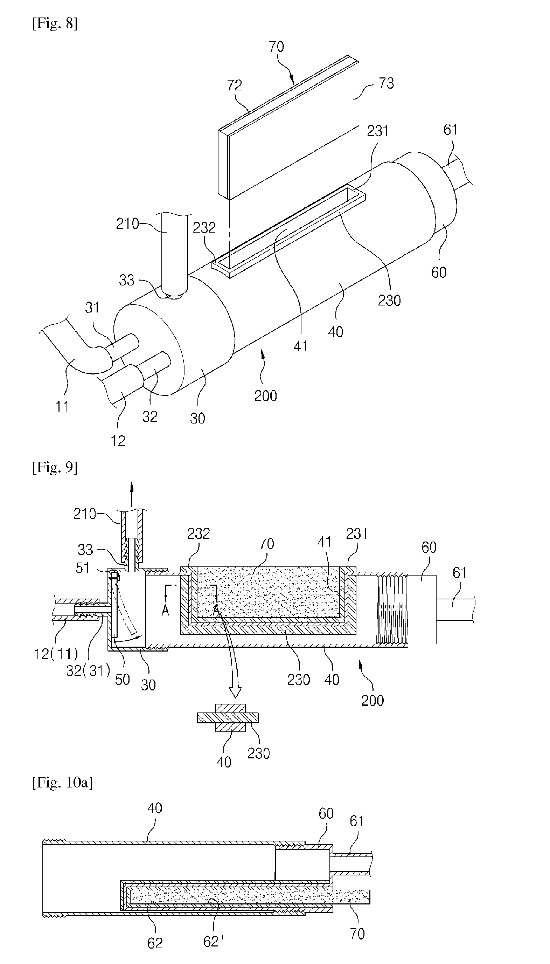

A heater 70 inserted into the insertion portion 41 of the penetration 40 is a PTC heater, in which copper thin plates (electrodes) 72 and 83 are heated by the supply of alternating current, differently from the first embodiment. In particular, as shown in FIG 9, the thermal expansion portion 200 comprising the penetration 40, the adaptor 30, and the connector 60 is made of synthetic resin, and a heat conductive metal plate 230 is formed by insert injection on the circumference of the insertion portion 41 of the penetration 40 such that the heater 70 is inserted into the heat conductive metal plate 230. As a result, the total weight of the thermal expansion portion 200 can be significantly reduced, compared to the case where the adaptor, the penetration, and the connector are all made of metal, and thus the total weight of the hot-water boiler can be reduced, resulting in cost reduction. Here, the inner surface of the heat conductive metal plate 230 is brought into surface contact with the copper thin plates 72 and 73 of the heater 70, and the outer surface of the heat conductive metal plate 230 protrudes to the inside of the penetration 40 to be brought into contact with hot water. As a result, the heat generated in the copper thin plates 72 and 73 is transferred to the outer side of the heat conductive metal plate 230 to heat the raw water and the return water at a desired temperature by natural circulation.

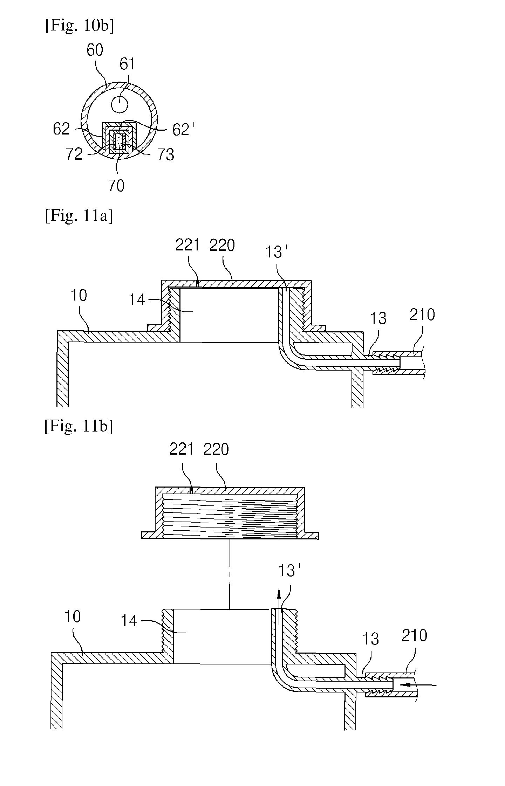

Moreover, as shown in FIGS. 10a and 10b, an insert 62 having a space 62' therein is integrally formed to be elongated in the connector 60 such that the protruding insert 62 is located in the penetration 40. Moreover, the heat conductive metal plate 230 may be formed by insert injection to protrude from the inner and outer sides of the insert 62, and the heater 70 is inserted into the space 62' of the insert 62. In this case, as shown in FIG. 10a, the protrusion of the insert 62 located in the penetration 40 is sealed, and the entrance of the insert 62 at the side of the connector 60 is open such that the heater 70 can be inserted therethrough. According to the present invention having the above-described configuration, as shown in FIG. 9a, the heat of the heater 70 can heat the hot water present in the penetration 40 and the connector 60 through the heat conductive metal plate 230. In the above, when the connector 60 and the penetration 40 are screw-connected to each other, the insert 62 is integrally formed with the connector 60, and thus there is no obstacle to the mutual connection.

Reference numeral 231 included in the above description denotes a ground terminal, and 232 denotes a temperature sensor terminal.

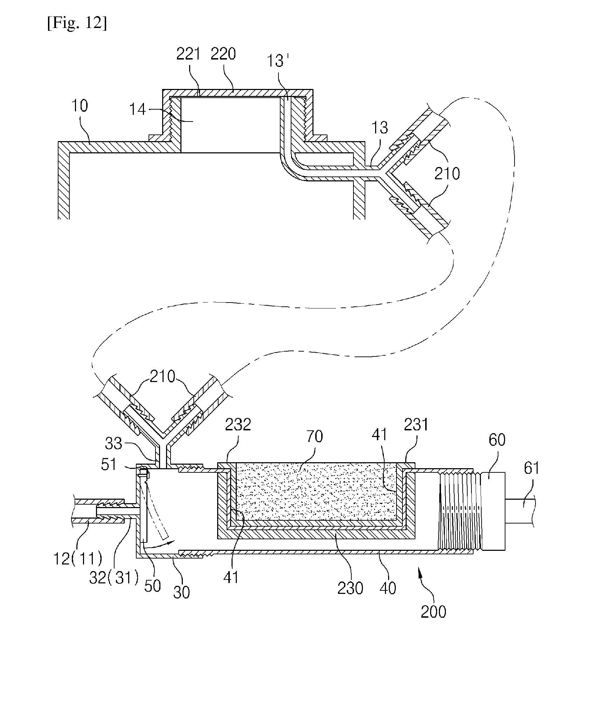

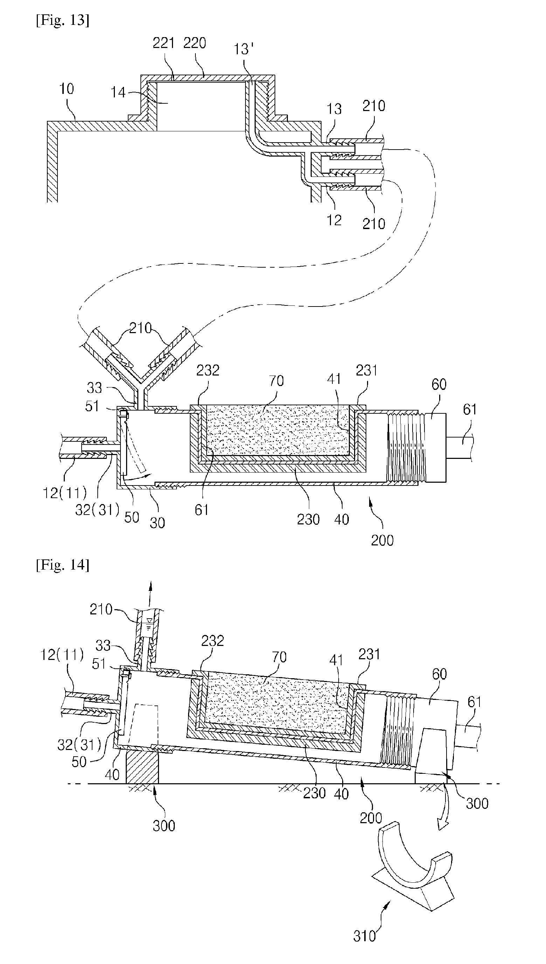

In the above, the air outlet 33 and the air inlet 13 are formed in a Y shape as shown in FIG 12 to prevent the discharge of steam during the air discharge and, at the same time, to separate the water and air such that the backflow of water is prevented, thus minimizing noise and facilitating the air discharge. Moreover, the air inlet 13 may comprise two inlets formed in parallel as shown in FIG. 13.

In particular, as shown in FIG. 14, according to the present invention, the adaptor 30 and the penetration 40 can be installed to be tilted such that the air in the penetration 40 can be discharged more rapidly. That is, when the raw water is supplied to the raw water supply inlet pipe 11, the connector 60 is tilted down, and thus the air present in the adaptor 30, the penetration 40, the connector 60, and the heating pipe 20 can be discharged toward the air outlet 33 while the raw water is supplied. In this case, the bottom of the thermal expansion portion 200, to which the adaptor 30, the penetration 40, and the connector 60 are connected, is inserted into fixing pieces 310 having an elastic force at the top of two supports 300, in which the supports 300 have different heights such that the adaptor 30 of the thermal expansion portion 200 is located higher than the connector 60, and thus the thermal expansion portion 200 is installed to be tilted.

Therefore, when the cover 220 is opened and then the raw water is supplied to the inside of the raw water tank 10, the raw water can be rapidly introduced into the adaptor 30 through the raw water inlet 31 and, at the same time, the return water introduced through the return water pipe 12 passes through the inside of the penetration 40 to the connector 60. As a result, more than 95% of the penetration 40 is filled with the raw water and the return water, and at this time, the air contained in the return water and the raw water is filled up to the bottom of the air hose 210 inserted into the air outlet 33 (in this case, the air hose 210 is installed vertically, and thus the raw water or return water cannot be easily discharged through the inside of the air hose 210 to the outside).

At this time, the cover 220 is opened to supply the raw water, and thus the air in the air hose 210 pushed up by the raw water and the return water is discharged through the air inlet 13 and the air outlet 13' to the outside. As a result, the state where little or no air is present in the thermal expansion portion 200 and the heating pipe 20 can be maintained.

In this state, when the cover 220 is closed and the heater 70 is operated at a desired temperature, more than 95% of the penetration 40 and the adaptor 30 are filled with the raw water and the return water in the thermal expansion portion 200 where little or no air is present. Then, the heat generated by the heater 70 is conducted to the heat conductive metal plate 230, with which the raw water and the return water are brought into surface contact by the conducted heat, and thus the thermal expansion portion 200 is thermally expanded more rapidly.

That is, since little or no air is present (when the air is present, it is necessary to heat the air, which reduces the heating time), the raw water and the return water can be heated more rapidly, which increases the heating efficiency, and thus the hot water can be circulated with a higher thrust due to high expansion force.

Therefore, the thermal expansion force is increased in the thermal expansion portion 200, and thus it is possible to increase the heat transfer efficiency and, at the same time, significantly reduce the energy consumption. Since the present invention having the above-described configuration is operated in a state where little or no air is present in the thermal expansion portion 200 and the heating pipe 20, it is possible to prevent bubbling or crackling noise from being generated in the thermal expansion portion 200 and the heating pipe 20.]

As such, the hot water is circulated through the heating pipe 20 by the thermal expansion force of the thermal expansion portion 200, and the air generated by the thermal expansion in the thermal expansion portion 200 is discharged through the small air hole 221 formed in the cover 220 through a small gap between the air outlet 13' and the inner lower surface of the cover 220, as described above.

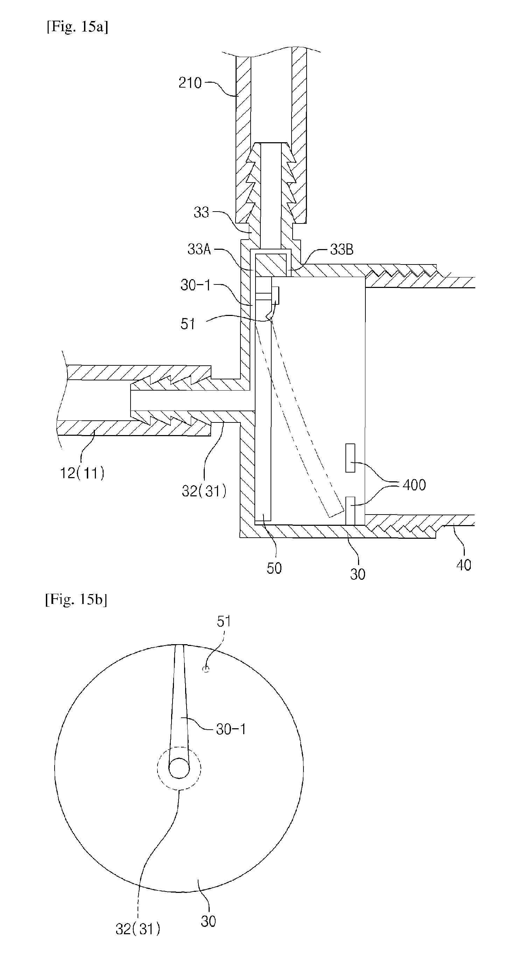

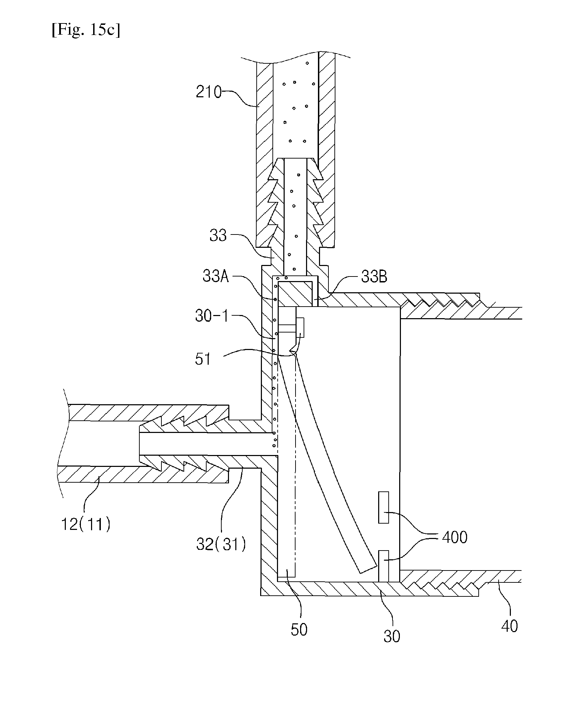

Meanwhile, in the present invention, when the return water that is circulated by the thermal expansion force in the thermal expansion portion 200 is introduced into the adaptor 30 through the return water inlet 32, it may collide with one side of the wing of the check valve 50 to generate air, and when this air is contained in the return water and introduced again into the penetration 40, it may reduce the thermal expansion force in the thermal expansion portion 200. In order to prevent this problem, as shown in FIGS. 15a, 15b and 15c, an air discharge groove 30-1 may be formed on the upper wall of one side of the adaptor 30 (this air discharge groove may have the same upper and lower groove widths or have a lower groove width greater than an upper groove width), and an air discharge hole 33A may be formed at the top of the adaptor 30 and connected to the air hose 210. Here, the air discharge hole 33A may be connected to an air discharge hole 33B formed at the bottom of the air discharge outlet 33 such that the air can be discharged through the air outlet 33. According to the present invention, the air that is generated when the return water circulated by high expansion force in the thermal expansion portion 200 collides with the wing of the check valve 50 can be discharged through the air hose 210, and thus it possible to prevent the penetration 40 from being filled with the air-mixed return water, thus efficiently increasing the thermal expansion force in the penetration 40. In the above structure, a stopper 400 may be installed on the inner circumference of the adaptor 30 at the rear of the wing of the check valve 50 to reduce the motion amplitude of the wing of the check valve 50. That is, when the wing of the check valve 50 is opened by the introduction of the return water or closed by the shutdown of the thermal expansion portion 200 (when reaching a predetermined temperature), the wing is moved with an amplitude within a predetermined range of motion, and thus the amplitude of the motion can be reduced to avoid noise due to the amplitude motion of the wing of the check valve.

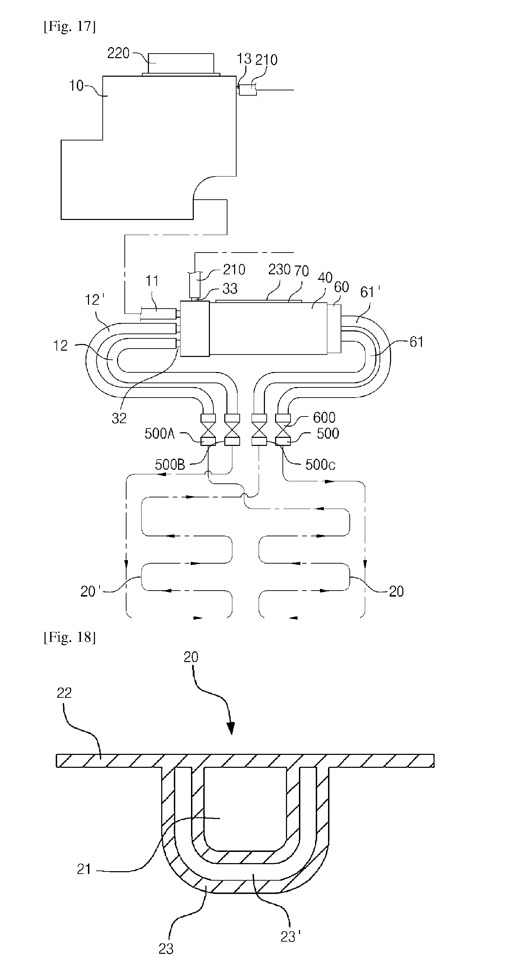

Moreover, according to the present invention, as shown in FIG. 17, another return water inlet 32' and another return water pipe 12' are installed in addition to the return water pipe 12 connected to the return water inlet 32 installed in the adaptor 30, and another hot-water discharge pipe 61' is installed on the other side of the connector 60 in addition to the hot-water discharge pipe 61, in which the return water pipe 12' and the hot-water discharge pipe 61' may be connected through a heating pipe 20' so as to heat a hot-water mat or heating floor having a greater area. In the above, the heating pipe 20 and the heating pipe 20' may be embedded in different positions such as a hot-water mat, a heating floor, etc., and in this case, an on-off valve 600 may be installed in a connection head 500 of the hot-water discharge pipe 61' such that the hot water is circulated through the heating pipe 20 only depending on the on-off state or circulated through both the heating pipe 20 and the heating pipe 20' according to a user's intention. For example, a control valve may be provided on each connection head such that a user who prefers something hot uses a hot-water mat in which the heating pipe 20 is embedded and which is heated by the hot water passing through the heating pipe 20 and a user who prefers something warm uses a hot-water mat in which the heating pipe 20' is embedded and which is heated by the hot water passing through the heating pipe 20'. In the figure, reference numerals 500A, 500B, and 500C denote connection heads.

According to the present invention of the second embodiment having the above-described configuration, when the raw water is insufficient or needs to be supplemented, the raw water is injected through the raw water injection hole 14 after opening the cover 220 screw-connected to the raw water injection hole 14 of the raw water tank 10, the air present in the thermal expansion portion 200 and the heating pipe 20 is discharged to the outside, the cover 220 is closed, and then the internal pressure is increased by operating the heater 70 of the thermal expansion portion 200. Therefore, the thermal expansion force is increased, which allows the hot water to be circulated more rapidly, and the air generated when the hot water is circulated is discharged through the small air hole 221 of the cover 220, thus preventing bubbling or crackling noise from being generated in the thermal expansion portion 200 and the heating pipe 20. That is, when the raw water or return water mixed with a lot of air is heated and circulated by the heating of the heater 70, the noise is significantly increased by the bubbling phenomenon in the thermal expansion portion 200 and the heating pipe 20, which causes the user, who uses the heating mat or heating floor, inconvenience due to noise pollution, but the present invention solves this problem to provide convenience of use.

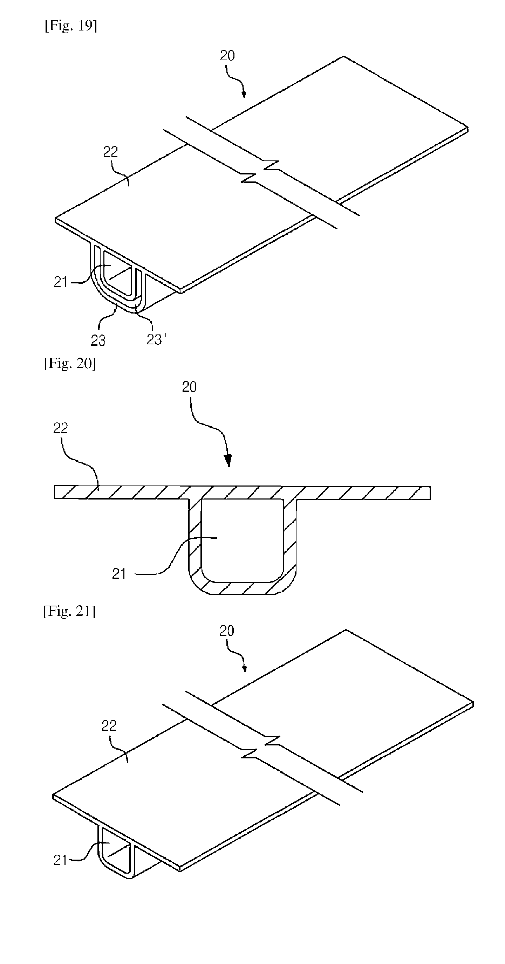

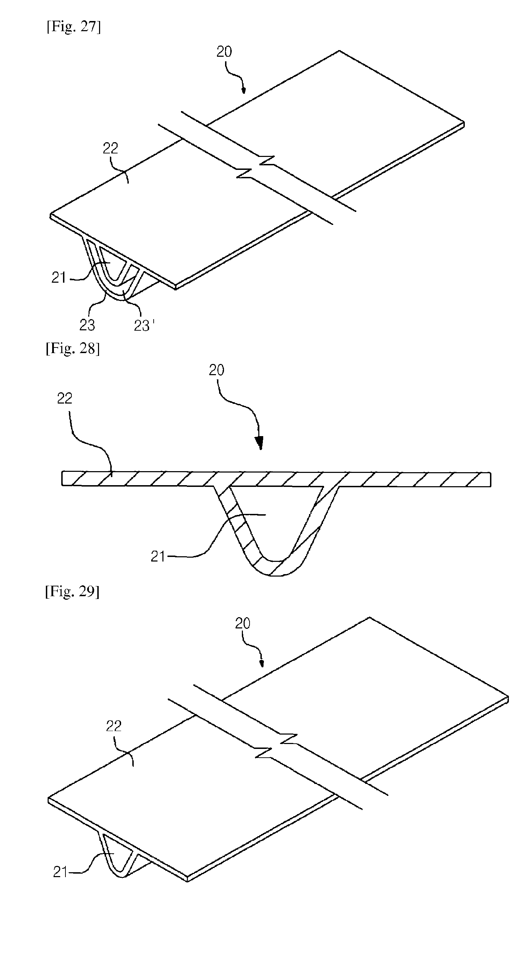

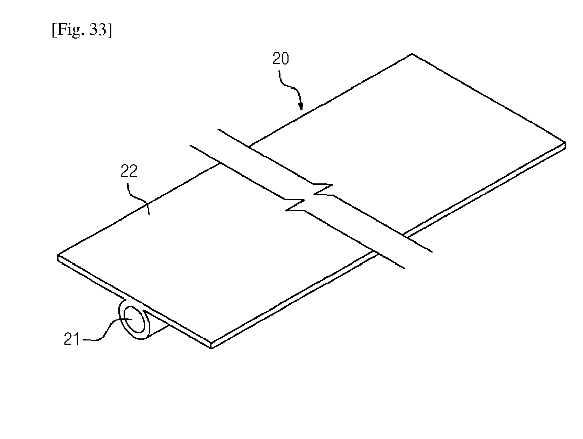

Next, a third embodiment with be described with reference to FIGS. 18 to 39.

The present invention according to the third embodiment provides a heating pipe 20 comprising a hot-water passing space formed by extrusion molding and applied to a hot-water boiler, in which a sensible heat portion 22 in the form of a flat plate is integrally formed on both sides of the upper surface of a semi-oval, rectangular, triangular, or circular hot-water passing space 21 and an upper end of a thermal insulator 23 having an air layer 23' is integrally formed with the sensible heat portion 22 on the lower outer circumference of the hot-water passing space 21, thus forming the heating pipe 20. That is, the sensible heat portion 22 in the form of a wing is integrally formed in the longitudinal direction on both ends of the upper surface of the hot-water passing space 21.

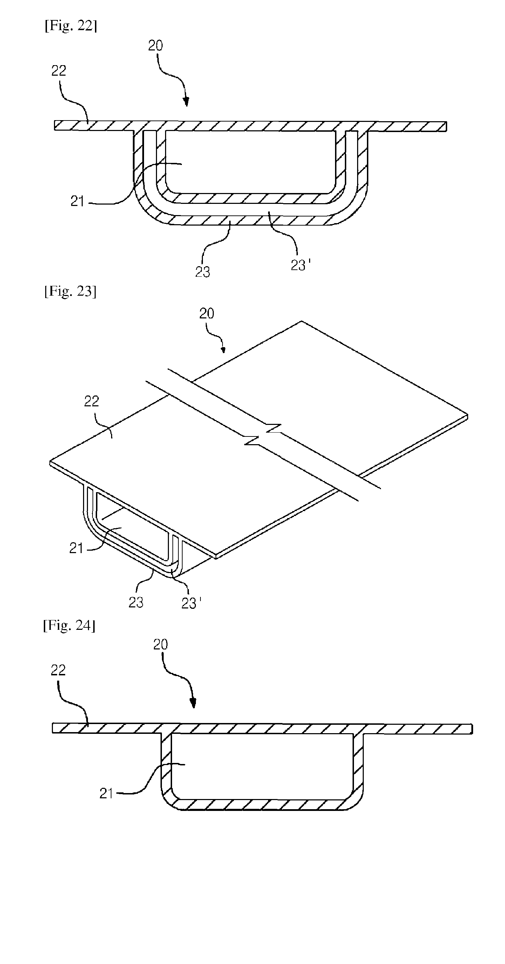

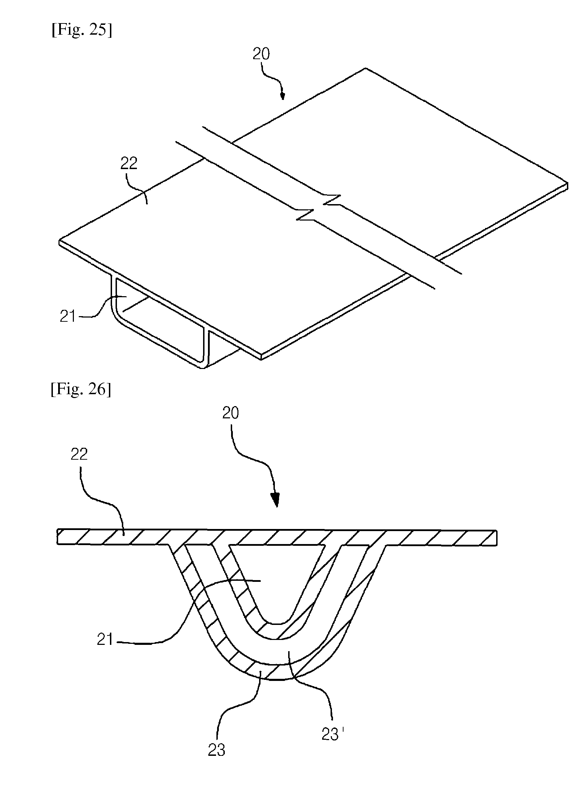

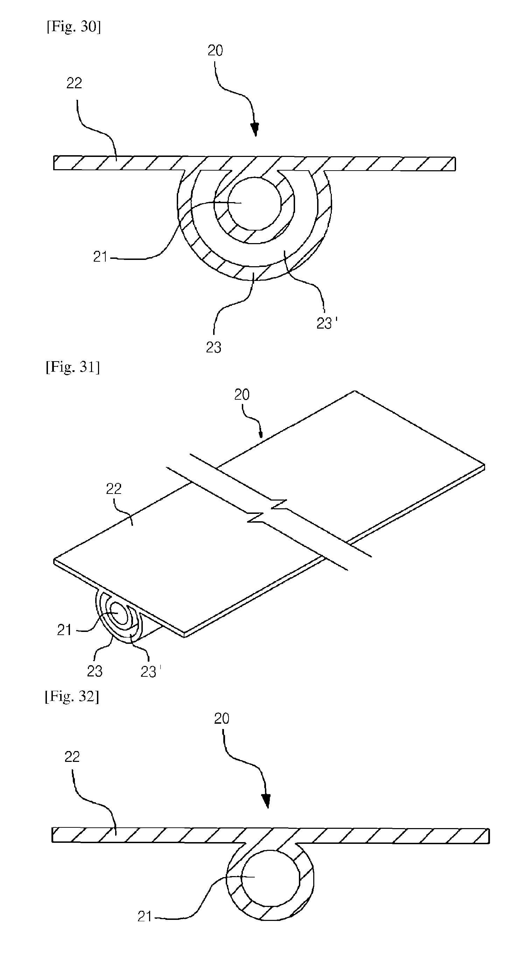

In the above, the hot-water passing space 21 may be formed in a semi-oval shape as shown in FIGS. 18 to 21, formed in a rectangular shape as shown in FIGG. 22 to 25, formed in a triangular shape as shown in FIGS. 26 to 29, or formed in a circular shape as shown in FIGS. 30 to 33, and may be formed by extrusion molding of aluminum, stainless steel, copper, rubber, synthetic resin, etc.

Moreover, according to the present invention, the thermal insulator 23 having the air layer 23' may or may not be formed on the outer circumference of the hot-water passing space 21. In the case where the thermal insulator 23 having the air layer 23' is formed on the outer circumference of the hot-water passing space 21, the heat from the hot water passing through the hot-water passing space 21 is to be prevented from leaking to the outside by the air layer 23' of the thermal insulator 23, and at the same time, most of the heat is to be transferred to the sensible heat portion 22 in the form of a flat plate. Whereas, in the case where the thermal insulator 23 having the air layer 23' is not formed on the outer circumference of the hot-water passing space 21, the heat from the hot water passing through the hot-water passing space 21 is to be conducted to the outer circumference of the hot-water passing space 21, but much more heat is to be transferred to the sensible heat portion 22 which is in the form of a flat plate.

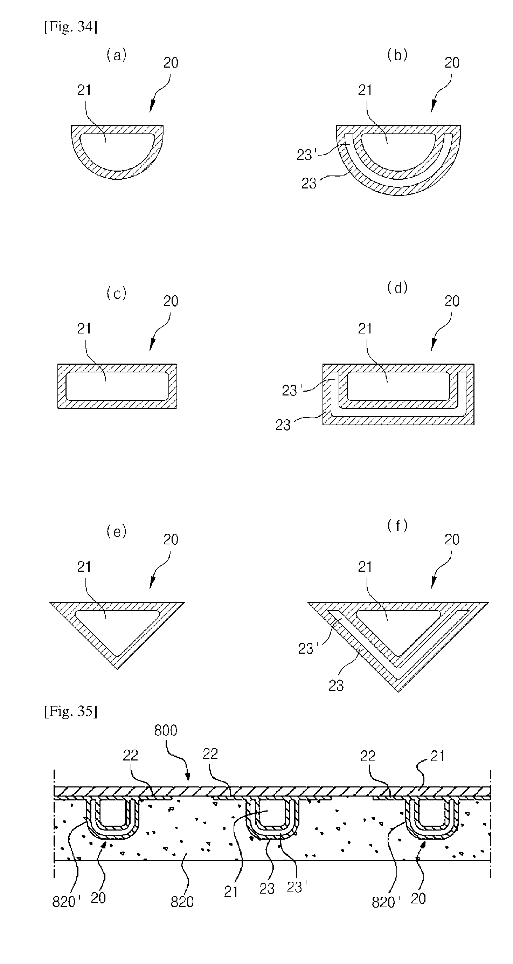

Meanwhile, according to the present invention, as shown in FIG. 34a, the heating pipe 20 may be formed in a semicircular shape, and the upper surface of the hot-water passing space 21 may be formed flat without the sensible heat portion 22 in the form of a wing such that the heat passing through the hot-water passing space 21 is to be transferred to the upper surface of the hot-water passing space 21. In this case, even without the sensible heat portion 22 in the form of a wing, the upper surface of the hot-water passing space 21 is formed flat, and thus much more heat can be transferred to the upper surface of the hot-water passing space 21 than the conventional circular heating pipe. Moreover, as shown in FIG. 34b, the thermal insulator 23 having the air layer 23' may be formed on the lower outer circumference of the hot-water passing space 21 formed flat without the sensible heat portion 22 in the form of a wing, thus forming the heating pipe 20.

FIGS. 34c, 34d, 34e, and 34f show rectangular and right triangular heating pipes 20, which are different embodiments of FIGS. 34a and 34b, in which the upper surface of the hot-water passing space 21 may be formed flat without the sensible heat portion 22 in the form of a wing such that the heat passing through the hot-water passing space 21 can be transferred to the upper surface of the hot-water passing space 21, or the thermal insulator 23 having the air layer 23' may be formed on the lower outer circumference of the rectangular or right triangular hot-water passing space 21 formed flat without the sensible heat portion 22 in the form of a wing, thus forming the heating pipe 20.

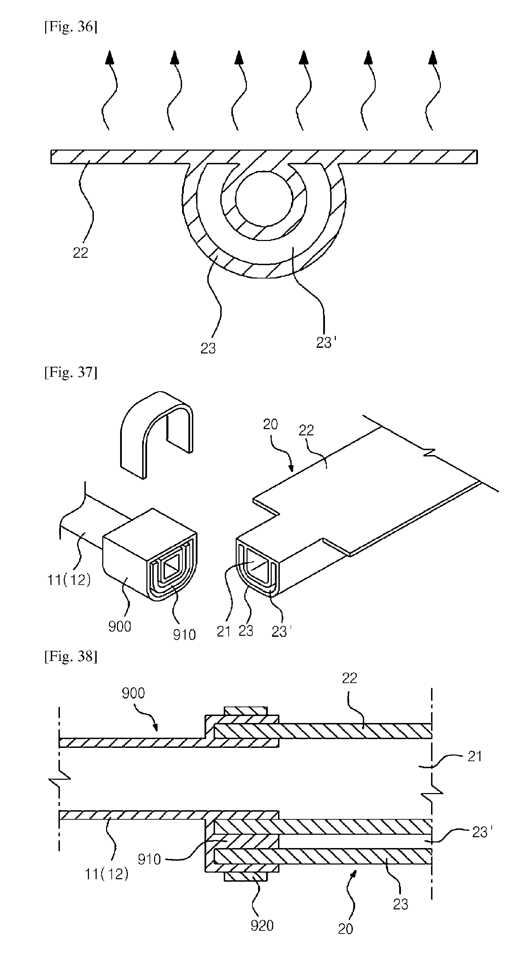

According to the present invention having the above-described configuration, as shown in FIG. 35, when a heating floor 800 is installed, an insertion groove 820' having the shape of the hot-water passing space 21 is formed on a perlite insulator 820 installed at the bottom of a floor surface 810, and then the heating pipe 20 of the present invention is embedded therein. The perlite insulator 820 is to prevent the heat from dissipating to the bottom of the sensible heat portion 22 or from dissipating to the outside of the insulator 23, and thus the heat can be more efficiently conducted to the top of the sensible heat portion 22 as much as possible as shown in FIG. 36.

In the above, the floor surface 810 comprises a vinyl linoleum, tile, marble, etc. and is installed such that the sensible heat portion 22 can be seen when the floor surface 810 is uncovered, and thus the heat of the sensible heat portion 22 can be conducted to the floor surface 810 as much as possible. Otherwise, when the floor surface 810 is covered with concrete, the concrete has a thickness of 5 mm or less such that the heat of the sensible heat portion 22 can be conducted to the floor surface 810 as much as possible.

In the above, the perlite insulator 820 is formed by crushing perlite having micropores into particles or powder of 0.5 mm or less in diameter by thermal expansion, mixing the particles or power with an adhesive (natural adhesive), and molding the mixture in a predetermined shape. That is, since the perlite particles of 0.5 mm or less are bonded to each other, the air layer having micropores in the particles is significantly smaller than the existing perlite particles, and thus the density is very high, which increases the insulation effect. Moreover, the perlite insulator 820 with increased load strength is very suitable for the heating floor 800. That is, the perlite used in the present invention eliminates the micropores that are present in the existing perlite, and thus the density thereof becomes very high.

Meanwhile, although the perlite is used as the insulator in the present invention, a thermal insulator comprising carbon fiber may preferably be used.

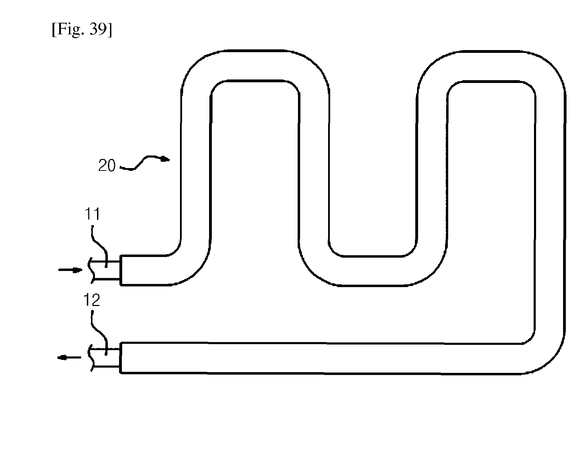

FIG. 37 is an exploded perspective view of a connector 900 and a pipe 20 showing the sealing of both ends of the air layer 23' of the thermal insulator 23 and, at the same time, the connection of the raw water supply inlet pipe 11 of a hot-water boiler, not shown, and the return water pipe 12 to the heating pipe 20, FIG. 38 is a cross-sectional view of FIG. 37, and FIG. 39 is a plan view showing the embedded heating pipe 20. In the figures, reference numeral 910 denotes a sealing packing for the air layer 23', and 920 denotes a coupler.

In the above, the air layer 23' is not formed by separately injecting air, but naturally generated during the formation of the heating pipe 20 of the present invention, and the air layer 23' on both ends of the pipe are sealed by the sealing packing 910 such that air is filled therein.

According to the present invention having the above-described configuration, when the raw water is supplied from the raw water supply inlet pipe 11 of the hot-water boiler, the raw water is heated by the thermal expansion portion 200 and transferred to the upper surface of the sensible heat portion 22 in the form of a flat plate integrally formed on the upper surface of the hot-water passing space 21, and the bottom and the outer circumference of the hot-water passing space 21 are thermally insulated by the air layer 23' of the thermal insulator 23, which makes it possible that much more heat can be transferred to the floor surface 810 of the heating floor 800 without loss of heat. In particular, according to the present invention, since the sensible heat portion 22 in the form of a flat plate is integrally formed on the upper surface of the hot-water passing space 21, the transferred heat can be rapidly diffused by a greater surface area, which reduces the loss of heat as much as possible, thus increasing the energy-saving effect.

Meanwhile, the present invention has been described with reference to the heating floor only, but can be applied to a heating mat with a small hot-water boiler.

Although the present invention has been described with reference to preferred embodiments thereof, these embodiments are merely illustrative of the present invention and are not intended to limit the scope of the invention, and it will be appreciated by those skilled in the art that a number of variations and modifications can be made in these embodiments without departing from the essential features of the invention. Moreover, differences related to these variations and modifications should be construed as being included in the scope of the invention as defined in the accompanying claims.

## Claims

1. A hot-water boiler comprising an adaptor 30 which connects one side of a raw water supply inlet pipe 11 through which raw water is supplied from a raw water tank 10 and one side of a return water pipe 12 through which return water is circulated from a heating pipe 20, respectively, such that the return water is prevented from being introduced into the raw water tank 10 to eliminate noise, a check valve 50 which allows the raw water and the return water to be introduced into a penetration 40 in the single adaptor 30, and a heater 70 which heats the raw water and the return water at the same time in the penetration 40 installed between the adaptor 30 and a connector 60 connected to the other side of the heating pipe 20.

2. The hot-water boiler of claim 1, wherein an air discharge induction filter 100 is fixedly mounted on one side of a connection pipe 90 which is put on a screw pipe 80 installed between one side of the heating pipe 20 and the return water pipe 12, and an air discharge pipe 110 is connected to the other side of the connection pipe 90 and opens into the raw water tank 10.

3. The hot-water boiler of claim 1, wherein the adaptor 30 is formed into one body, wherein a raw water inlet 31 in the form of a screw, on which one side of the raw water supply inlet pipe 11 is put, is integrally formed at the top of one side thereof and a return water inlet 32 in the form of a screw, on which one side of the return water pipe 12 is put, is integrally formed at the bottom of one side thereof, respectively, and wherein a single check valve 50 is installed by a fixing pin at the top of the inside of the adaptor 30 to be opened and closed by the raw water and the return water introduced through the raw water and return water inlets 31 and 32.

4. The hot-water boiler of claim 1, wherein the penetration 40 is screw-connected between a screw portion on the other side of the adaptor 30 and the connector 60 connected to the other side of the heating pipe 20, and an insertion groove 41 into which the heater 70 is inserted is formed in the penetration 40 such that the heater 70 is inserted therein.

5. The hot-water boiler of claim 1, wherein the heater 70 is configured by bonding copper thin plates 72 and 73 to both ends of a surface heating element 71, and direct current terminals (+) and (-) are formed on both ends of the copper thin plates 72 and 73 to supply a direct current.

6. The hot-water boiler of claim 1, wherein a surface contact protrusion 44 or a heat radiation fin 45 is formed in the penetration 40 to increase the surface contact ratio of the raw water and the return water.

7. The hot-water boiler of claim 1 or 4, wherein a hollow portion 46 is formed between the outside of the heater insertion groove 41 of the penetration 40 and the inside of the penetration 40.

8. A hot-water boiler in which one side of a raw water supply pipe 11, through which raw water is supplied from a raw water tank 10 installed in a case 200, is connected to a raw water inlet 31 of an adaptor 30, a hot-water discharge pipe 61 is installed on a connector 60 connected to one side of a penetration 40 connected to the adaptor 30, a heating pipe 20 is connected between the hot-water discharge pipe 61 and a return water pipe 12 connected to a return water inlet 32 installed in the adaptor 30, and the heater 70 is inserted into an insertion portion 41 of the penetration 40, wherein an air hose 210 is connected between an air outlet 33 installed at the top of the adaptor 30 and an air inlet 13 installed at the top of one side of the raw water tank 10, and wherein the air inlet 13 is integrally formed to penetrate the inside of a raw water injection hole 14 of the raw water tank 10, and an air outlet 13' connected to the air inlet 13 is bought into surface contact with the inner surface of a cover 220 when the air outlet 13' closes the cover 220.

9. The hot-water boiler of claim 8, wherein the air outlet 33 and the air inlet 13 are formed in a Y shape.

10. The hot-water boiler of claim 8, wherein the bottom of a thermal expansion portion 200, to which the adaptor 30, the penetration 40, and the connector 60 are connected, is inserted into fixing pieces 310 having an elastic force at the top of two supports 300, and wherein the supports 300 have different heights such that the adaptor 30 of the thermal expansion portion 200 is located higher than the connector 60.

11. The hot-water boiler of claim 8, wherein the thermal expansion portion 200 comprising the penetration 40, the adaptor 30, and the connector 60 is made of synthetic resin, and a heat conductive metal plate 230 is formed by insert injection on the circumference of the insertion portion 41 of the penetration 40 such that the heater 70 is inserted into the heat conductive metal plate 230.

12. The hot-water boiler of claim 8, wherein an air discharge groove 30-1 is formed on the upper wall of one side of the adaptor 30, and an air discharge hole 33A is formed at the top of the adaptor 30 and connected to the air hose 210, and wherein the air discharge hole 33A is connected to an air discharge hole 33B formed at the bottom of the air discharge outlet 33 such that the air is discharged through the air outlet 33.

13. The hot-water boiler of claim 8, wherein another return water inlet 32' is installed at the entrance of the penetration 40 in addition to the return water inlet 32, and another hot-water discharge pipe 61' is installed on the other side of the connector 60 in addition to the hot-water discharge pipe 61, and wherein the return water pipe 12' and the hot-water discharge pipe 61' are connected through a heating pipe 20'.

14. The hot-water boiler of claim 8, wherein an insert 62 having a space 62' therein is integrally formed to be elongated in the connector 60 such that the protruding insert 62 is located in the penetration 40, the heat conductive metal plate 230 is formed by insert injection to protrude from the inner and outer sides of the insert 62, and the heater 70 is inserted into the space 62' of the insert 62.

15. A heating pipe comprising a hot-water passing space formed by extrusion molding and applied to a hot-water boiler, wherein a sensible heat portion 22 in the form of a flat plate is integrally formed on both sides of the upper surface of a semi-oval, rectangular, triangular, or circular hot-water passing space 21 and an upper end of a thermal insulator 23 having an air layer 23' is integrally formed with the sensible heat portion 22 on the lower outer circumference of the hot-water passing space 21, thus forming the heating pipe 20.

16. The heating pipe of claim 15, wherein the sensible heat portion 22 in the form of a flat plate is integrally formed on the upper surface of the semi-oval, rectangular, triangular, or circular hot-water passing space 21 without the thermal insulator 23 having the air layer 23'.

17. The heating pipe of claim 15, wherein the heating pipe 20 is formed in a semicircular, rectangular, or right triangular shape, and the upper surface of the hot-water passing space 21 is formed flat without the sensible heat portion 22 in the form of a wing such that the heat passing through the hot-water passing space 21 is to be transferred to the upper surface of the hot-water passing space 21.

18. The heating pipe of claim 15, wherein the thermal insulator 23 having the air layer 23' is formed on the lower outer circumference of the rectangular or right triangular hot-water passing space 21 formed flat without the sensible heat portion 22 in the form of a wing, thus forming the heating pipe 20.

19. A heating pipe installation structure, in which an insertion groove 820' having the shape of a hot-water passing space 21 is formed on a perlite insulator 820 installed at the bottom of a floor surface 810 of a heating floor 800, and a the heating pipe 20 is embedded therein.

20. The heating pipe installation structure of claim 19, wherein the perlite insulator 820 is formed by crushing perlite into particles or powder of 0.5 mm or less in diameter, mixing the particles or power with an adhesive, and molding the mixture in a predetermined shape.

21. The heating pipe installation structure of claim 19, wherein the floor surface 810 is installed such that a sensible heat portion 22 is seen when the floor surface 810 is uncovered, the floor surface 810 comprising a vinyl linoleum, tile, marble, etc.
